# EUROPEAN PATENT SPECIFICATION

(11) **EP 2 958 852 B1**
(45) Date of publication and mention of the grant of the patent: **15.01.2020**
(21) Application number: 14753941.5
(22) Date of filing: 22.02.2014
(51) Int. Cl.: B67D 7/34, G06K 7/00, B67D 7/14

(54) **RFID READER AND METHOD FOR SECURING FUEL DELIVERY WITH A FUEL DISPENSING NOZZLE**
RFID-LESER UND VERFAHREN ZUR SICHERUNG EINER BRENNSTOFFZUFUHR MIT EINER KRAFTSTOFFZAPFPISTOLE
LECTEUR RFID ET PROCÉDÉ DE SÉCURISATION DE LA DÉLIVRANCE DE CARBURANT AU MOYEN D'UN PISTOLET DE DISTRIBUTION DE CARBURANT

(30) Priority: 22.02.2013 US 201361767905 P
(43) Date of publication of application: 30.12.2015
(73) Proprietor: Orpak Systems Ltd, 5111401 Bnei Brak (IL)
(72) Inventor: KELRICH, David, 47213 Ramat Hasharon (IL); PERI, Itay, 4485100 Alfe-Menashe (IL); SOLODAR, Amichay, 75491 Rishon Lezion (IL); SELA, Uri, 67675 Tel Aviv (IL); LIVNEH, Saar, 52960 Ramat-Efal (IL)
(74) Representative: Handanoglu, Erdal
(86) International application number: PCT/IL2014/050190
(87) International publication number: WO 2014/128711

(56) References cited:
- EP-A1- 2 009 573
- EP-B1- 1 145 203
- WO-A1-2010/001396
- CN-A- 102 880 845
- US-A1- 2005 269 407
- US-A1- 2006 238 305
- US-A1- 2009 045 978
- US-B1- 6 899 151

## Description

### FIELD OF THE INVENTION

The present invention relates to a device and method for facilitating secure fuel delivery to a vehicle and in particular, to such a device and method that comprises tamperproof means and optimizes communication between a vehicle and a fuel authorization system to reduce read failures while ensuring the integrity of the fuel delivery process via a fuel dispensing nozzle therein safeguarding against fuel theft.

### BACKGROUND OF THE INVENTION

Automatic fuel authorization systems are commonly used for vehicle forming part of a fleet. The fuel authorization system forms part of a fleet management system and is commonly used as a tool to secure the refueling process. Fuel authorization systems are in place to try to reduce to a minimum fuel theft at the fuel delivery pump by ensuring that only authorized vehicles may be refueled at the fuel delivery pump.

Fuel authorization systems generally include a remote fuel authorization server that authorizes fuel delivery at a fuel delivery pump for vehicles identified as an authorized fleet member. The vehicle identification is provided by a vehicle radio frequency identification ('RFID') tag that may for example include vehicle identification; type of fuel required and fuel payment data. In order to gain fuel authorization, the vehicle identification data must be corroborated and/or authenticated by the authorization server. The vehicle data is communicated to the authorization system via radio frequency identification ('RFID') reader and a communication gateway. Accordingly the RFID reader, disposed on a fuel dispensing nozzle, reads the vehicle identification and communicates that information to the authorization server via a communication gateway.

Accordingly in order to obtain fuel authorization the RFID reader must be able to accurately and properly read the RFID vehicle tag, utilizing wireless communication generally in the form of wireless communication, and communicates that information to the authorization server.

The RFID technology utilizes the RFID tags and antennae attached to a vehicle, usually disposed about the vehicle fuel tank filler neck inlet area. The vehicle tag is capable of providing vehicle identification data that is to be authenticated with the authorization server. The RFID reader is used as a data communication and control point capable of reading vehicle identification data disposed on the vehicle tag and thereafter communicating with the remote authorization system (optionally a fleet control center) to obtain fueling authorization if the communicated data is corroborated

A mounting assembly for mounting a RFID reader on a fuel dispensing nozzle is known from US 6 899 151 B1 and from US2009/0045978 A1.

### SUMMARY OF THE INVENTION

The invention relates to a mounting assembly for a fuel dispensing nozzle, according to claim 1.

Despite the use of such fuel delivery systems, state of the art RFID readers disposed on fuel dispensing nozzles are prone to tampering. Tampering attempts to circumvent the security measures allow unauthorized fuel delivery to an unauthorized vehicle, non-fleet member.

Current state of the art RFID nozzle readers are also limited in that they are prone to identification errors, where the vehicle tag is not properly identified due to read faults between the vehicle RFID tag and the dispensing nozzle reader. Such identification errors lead to false-negative results where fuel delivery is denied to a fleet member.

The identification error are generally due to read failures due to non-optimized communication signals between the vehicle RFID tag and RFID readers disposed about the fuel dispensing nozzle. Non-optimized communication signals between the RFID vehicle tag and the RFID reader may be due to a high degree of variability in the frequencies produced by the RFID vehicle tag.

The variance in RFID vehicle tag frequencies may be a result of a number of optional reasons for example including but not limited to variance in the placement and location of the RFID tag and communication antennae on the vehicle side, the geometry of the fuel-tank delivery inlet area and materials forming the fuel-tank inlet area, the distance from the vehicle tag to the RFID nozzle reader antennae, the type of nozzle utilized, the fuel dispensing nozzles geometry incongruence with the geometry of the fuel-tank delivery inlet area, the shape of the fuel tank delivery neck, the like and any combination thereof.

The variance in RFID vehicle tag frequencies hampers the communication between the vehicle RFID tag disposed about a fuel dispensing nozzle and the RFID reader such that communication between them is not optimized and therefore susceptible to read failures. Communication errors such as read failures generally and ultimately lead to failures in the authorization process where authorization is denied. Communication errors and read failures could also lead to mistakes in various aspects of the fueling authorization process for example including but not limited to vehicle identification, fuel type identification, vehicular data, fuel authorization, or the like.

An embodiment of the present invention overcomes the deficiencies of the background by providing a device system and method for securing fuel authorization system by providing an RFID reader that may be disposed on the fuel dispensing nozzle that comprises both tamperproof protection and is capable of optimizing communication between vehicle RFID tag so as to minimize read failures and increase the reader's communication range, therein optimizing the fuel authorization system.

Most preferably the gateway between the vehicle and the authorization system is realized in the form of a RFID reader that is disposed about the fuel dispensing nozzle. A preferred embodiment of the present invention provides for optimizing communication between the vehicle identification RFID tag and the RFID reader disposed on the fuel dispensing nozzle. Most preferably the RFID reader according to the present invention comprises a communication optimization module for identifying an optimal communication channel and/or frequency for communicating between the vehicle side tag and the nozzle side tag. Therein the RFID reader according to the present invention optimizes communication by way of customizing and/or adjusts its communication channel and/or frequency according to the vehicle tag communication capability, therein overcoming communication errors and/or read failures experienced with state of the vehicle tag due to a number of reasons, as previously discussed. Most preferably the RFID reader according to the present invention further provides for optimizing the communication range between the vehicle tag and dispensing nozzle's reader.

Most preferably the RFID reader for fuel dispensing nozzle according to the present invention is characterized in that it comprises tamperproof protection for securing the refueling process, is battery powered by readily replaceable batteries, that may be installed in a number of configurations suitable for various dispensing nozzle types, and comprises a communication optimization module for ensuring and securely communicating between the vehicle side tag and the authorization system in an efficient manner.

A preferred embodiment of the present invention provides an improved RFID reader for fuel dispensing nozzles to secure and improve the fuel delivery process. The RFID reader according to the present invention includes a battery operated power supply module, electronic circuitry, RFID communication module, communication optimization module and tamperproof removal protection module.

Most preferably the communication optimization module provides for scanning through a plurality of RFID frequencies and identifying the frequency which best suites communication with a specific vehicle side tag so as to optimize the communication between the RFID reader on the nozzle and the RFID tag on the vehicle. Most preferably optimization module ensures that optimal and secure communication conditions are in place between any particular vehicles tag and the RFID reader. Optimization measures are taken because no two vehicles utilize the same communication frequency, as the actual frequency utilized varies greatly from one vehicle tag to another due various reasons.

The variance in RFID vehicle tag frequencies may be a result of a number of optional reasons for example including but not limited to variance in the placement and location of the RFID tag and communication antennae on the vehicle side, the geometry of the fuel-tank delivery inlet area and materials forming the fuel-tank inlet area, the distance from the vehicle tag to the RFID nozzle reader antennae, the type of nozzle utilized, the fuel dispensing nozzles geometry not congruent with the geometry of the fuel-tank delivery inlet area, the shape of the fuel tank delivery neck, the like and/or any combination thereof that may lead to communication errors and/or read failures between the vehicle tag and the nozzle reader.

Most preferably tamperproof protection according to the present invention may be realized in the form of a circuit break measure that if activated provides an indication of tampering and/or possible illegal activity. For example a circuit breaker may serve as removal protection to identify any attempts to remove or displace the RFID reader from the dispensing nozzle. Optionally and preferably the circuit break may be associated with the RFID reader's electronic circuitry and disposed about at least one or more mounting screws, such that most preferably should an individual attempt to remove the RFID reader from a first fueling dispensing nozzle and attempt to place it on a second, unwarranted, dispensing nozzle it would render the fuel RFID reader non-functional while generating a signal indicative of the tampering attempt.

Optionally and preferably the RFID reader housing may be installed about at least one end, for example front or back of the refueling nozzle, the configuration depending on the type of fuel dispensing nozzle utilized. Optionally and preferably installation of the RFID reader according to the present invention is seamlessly coupled about the fuel dispensing nozzle spout such that it utilized dispending nozzle spout's structures for the installation. For example, an RFID reader installation bracket is designed to couple and/or associate with existing nozzle structures for example including but not limited to coupling screws or the like.

Optionally RFID reader housing may be a single housing or a split housing comprising two or more portions.

Optionally a single housing may be utilized for an end position installation most preferably, front nozzle installation for example about the nozzle spout.

Optionally split housing may comprises at least two or more sub-portions that may be utilized for back installation where a first housing may be disposed about the back portion of the nozzle (about the filling hose) and a second housing may be disposed about the nozzle spout, optionally and most preferably tamperproof protection, for example in the form of a circuit break wire or the like, may be disposed between the first and second housing.

Most preferably the power supply module is configured to be powered by standard replaceable/disposable batteries. Optionally and most preferably power supply module may be configured such that the batteries may be readily replaced without requiring technician intervention or specialized technical installation or the like process by a trained technician as is the current practice.

Most preferably the circuitry module comprises a status indicator and/or display for example in the form of a LED (Light Emitting Diode) indicator and/or alphanumeric display screen, to indicate user data, RFID reader status or the like to a user.

Within the context of this application the term RFID refers to any means for wireless identification communication for example including but not limited to radio frequency, near field, contactless, communication, wireless, or the like.

Unless otherwise defined, all technical and scientific terms used herein have the same meaning as commonly understood by one of ordinary skill in the art to which this invention belongs. The materials, methods, and examples provided herein are illustrative only and not intended to be limiting.
Implementation of the method and system of the present invention involves performing or completing certain selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a processor using any suitable operating system. In any case, selected steps of the method and system of the invention could be described as being performed by a data processor, such as a computing platform for executing a plurality of instructions.

Although the present invention is described with regard to a "computer" on a "computer network", it should be noted that optionally any device featuring a data processor and/or the ability to execute one or more instructions may be described as a computer, including but not limited to a PC (personal computer), a server, a minicomputer, a cellular telephone, a smart phone, a PDA (personal data assistant), a pager. Any two or more of such devices in communication with each other, and/or any computer in communication with any other computer may optionally comprise a "computer network".

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
FIG. 1 is a schematic illustrative diagram of a system comprising state of the art fuel dispensing nozzle and a RFID reader according to a preferred embodiment of the present invention;
FIG. 2A-B are schematic illustrative diagrams of optional installation configuration for an RFID reader not according to the present invention; FIG. 2A showing a single housing front end installation; FIG. 2B showing a split housing installation;
FIG. 3A is a schematic illustrative exploded view of a RFID reader, show in in FIG. 2A, not according to the present invention;
FIG. 3B-E are schematic illustrative views of an optional RFID reader and mounting unit according to optional embodiments of the present invention;
FIG. 4A-B are schematic illustrative views of an optional RFID reader not according to the present invention; and
FIG. 5 is a flowchart of an optional method for optimizing communication between a vehicle RFID tag and a dispensing nozzle RFID reader, according to an embodiment of the present invention.

### DESCRIPTION OF THE PREFERRED EMBODIMENTS

The principles and operation of the present invention may be better understood with reference to the drawings and the accompanying description. The following figure reference labels are used throughout the description to refer to similarly functioning components are used throughout the specification hereinbelow.
- 10: Fuel dispensing nozzle;
- 10h: dispensing nozzle hose;
- 10s: dispensing nozzle spout;
- 12: dispensing nozzle front side;
- 14: dispensing nozzle back side;
- 50: Dispensing nozzle RFID reader system;
- 50e: end installation RFID reader system;
- 50s: split installation RFID reader system;
- 100: RFID Reader;
- 101: Reader Housing;
- 101a: reader housing main body;
- 101c: reader housing cover;
- 101b: split housing back portion;
- 101f: split housing front portion;
- 102: mounting adapter;
- 102a: spout adapter coupling member;
- 102b: nozzle body mounting bracket;
- 102c: mounting coupling members;
- 102d: nozzle mounting coupling screw;
- 102h: spout mounting member adapter;
- 104: power supply module;
- 106: antennae;
- 108: tamperproof protection;
- 108a: tamperproof conduit;
- 108b: circuit breaker;
- 108c: circuit break cover;
- 108s: fixation screw;
- 110: electronic circuitry; and
- 110i: indicator/display
- 112: optimization module;
- 120: main housing;
- 120b: housing body;
- 120f: housing face;
- 120r: central recess;
- 120s: coupling screws;
- 122: gap plate
- 124: core;
- 126: gap plate;
- 128a,b: split backing;

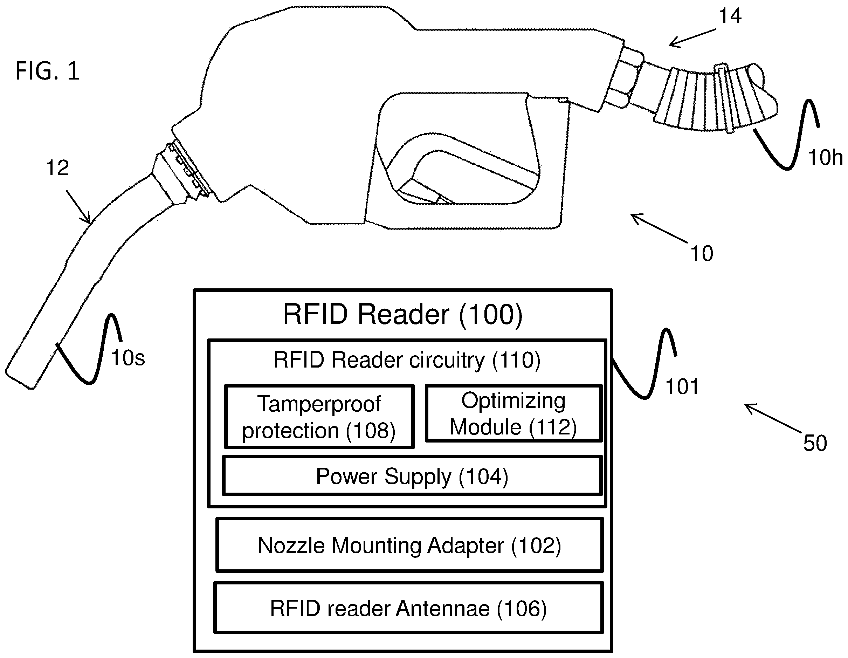

Referring now to the drawings, Figure 1 is a schematic illustrative diagram of an exemplary system 50 according to the present invention comprising a standard fuel dispensing nozzle 10 and a RFID reader 100 according to a preferred embodiment of the present invention.

The fuel dispensing nozzle 10 comprises a front side 12 where the nozzle spout 10s is located and a back side 14 defined by the fuel hose 10h through which fuel is delivered. The RFID reader 100 may optionally be installed on any portion of nozzle 10 for example including but not limited to one end front 12 or back 14, both ends front 12 and back 14 in a split formation, the like or any combination thereof.

Most preferably RFID reader 100 comprises housing 101, a nozzle mounting adapter 102, power supply module 104, RFID antennae 106 and RFID circuitry module 110. Most preferably RFID circuitry 110 comprises electronics required to operate and render a RFID reader 100 functional, and further comprises tamperproof protection 108 and an optimization module 112.

Optionally and most preferably RFID reader 100 may be disposed in a housing 101. Housing 101 is configured to be installed about any portion of nozzle 10 for example including but not limited to either or both front side 12 or back portion 14.

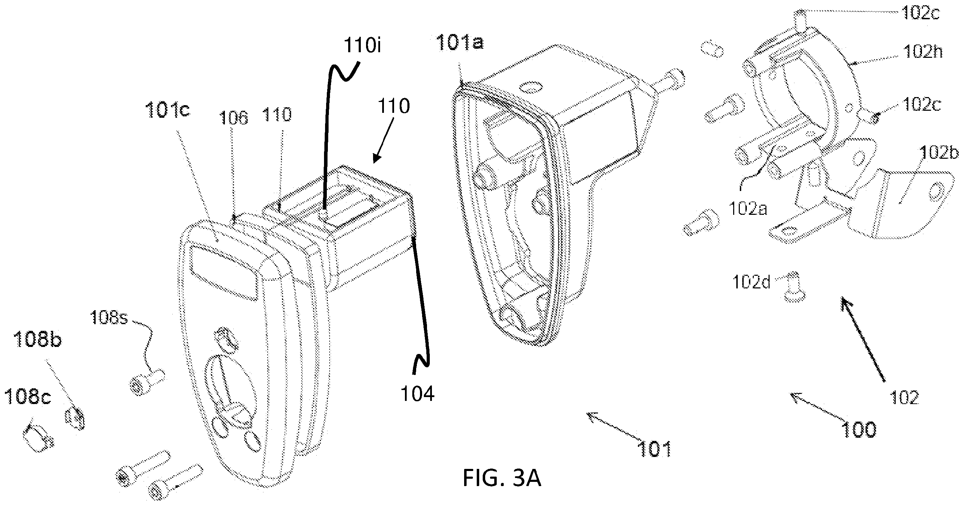

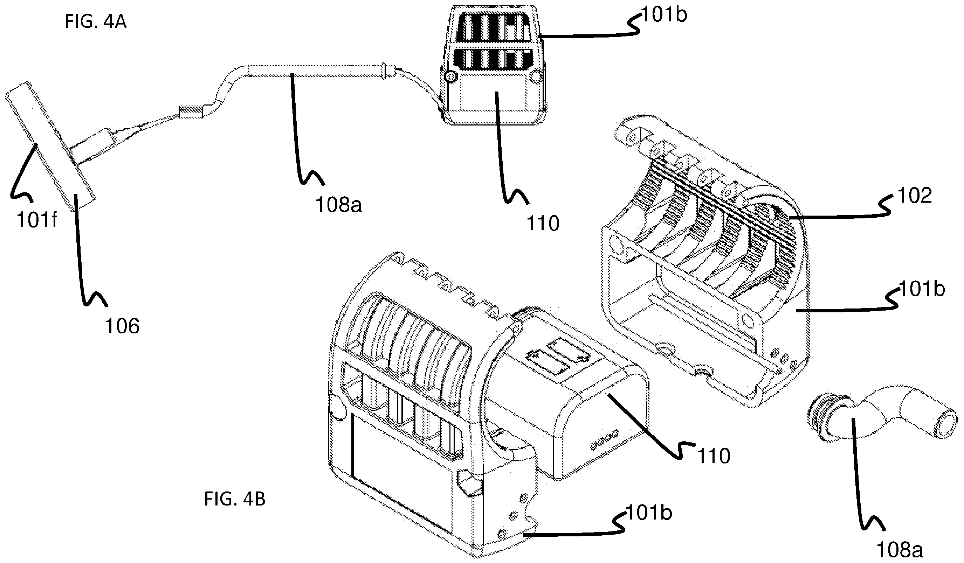

Most preferably reader 100 may be fit within a housing 101 to facilitate coupling to nozzle 10. Optionally housing 101 may be realized as a single portion member, facilitating an end portion installation system 50e, (FIG. 3A) or as a multi portion member and/or a split housing member, facilitating installation about both ends as in system 50s (FIG. 4A-B). Optionally the type of housing utilized may be configured according to optional parameters associated with the nozzle 10 coupled thereto, for example including but not limited to the type of nozzle, shape of the nozzle, nozzle size, any combination thereof or the like.

Mounting adapter 102 provides for facilitating coupling and/or associating reader housing 101 with nozzle 10. Adapter 102 provides for seamlessly coupling and/or otherwise associating housing 101 to nozzle 10 by utilizing optional structures, coupling members, disposed on and forming part of on nozzle 10 so as to ensure the secure and seamless coupling and ease of installation process.

Optionally and preferably power supply module 104 provides a power source to supply reader 100 with power and is particular associated with electronic circuitry 110 to power and operate reader 100. Optionally and preferably power supply module 104 may be provided in the form batteries.

Most preferably the power supply module 104 may be configured to be powered by standard replaceable and/or disposable batteries. Optionally and most preferably power supply module104 may be configured such that the batteries may be readily replaced without requiring technician intervention or specialized technical installation in a laboratory setting or the like process by a trained technician as is the current practice. Optionally and most preferably power supply module 104 provides for and therefore allow for on-site battery replacement.

Most preferably reader 100 comprises a RFID antennae 106 that is provided for facilitating communication between a vehicle tag (not shown) and an authorization system (not shown). Optionally and preferably antennae 106 may be provided as a standard radio frequency antennae. Optionally and preferably antenna 106 may be shaped and/or configured to fit with a portion of dispensing nozzle 10 and/or housing 101, for example about its spout disposed on front portion 12. Optionally antennae 106 may further comprise at least one or more coupling members to couple and/or otherwise associate and securely fit with at least a portion of nozzle 10, for example its spout.

Most preferably circuitry module 110 comprises standard processing, communication and circuitry requirements to render the RFID reader 100 functional as a RFID reader with, power supply 104 and a working RFID reader antennae 106. Circuitry module 110 according to the present invention is characterized in that it further comprises tamperproof protection means 108 and an optimization module 112.

Optionally and preferably tamperproof protection 108 may be provided for securing RFID reader 100 such that it may be activated only with an attempt to remove or otherwise disassociate reader 100 from nozzle 10. Optionally activating tamperproof protection 108 will render reader 100 non-operational. Optionally activating tamperproof protection 108 may provide an alarm or the like indication, to authorized individuals, of the attempt to tamper with or remove reader 100 from nozzle dispenser 10.

Optionally circuitry module 110 may comprise at least one or more and optionally a plurality of tamperproof protection 108. Optionally tamperproof protection 108 may be provided in optional forms for example including but not limited to a circuit-break and/or removal protection ID chip, the like or any combination thereof. Optionally removal protection ID chip is utilized as is known in the art. For example removal protection ID chips may comprise a group of microchips in communication with one another, the group comprising at least two or more microchips that are coupled to at least two individual surfaces that are to be maintained at a pre-defined distance from one another. The microchips are to be maintained at a pre-defined short distance, for example in the order of millimeters and/or centimeters, relative to one another, in order to avoid an alarm state indicative of tampering. If the distance between microchips exceed the defined short distance communication between the microchips is severed, optionally rendering them non-functional, indicative of a removal attempt that may preferably produce an optional alarm state that may be communicated for example as described below.

Optionally a communication test between ID chips, optionally disposed as part of tamperproof protection module 108, and circuitry module 110, may be utilized to ensure that the ID chips are functioning properly and are in-tact. Optionally the communication test may optionally be provided in optional forms for example including but not limited to reading time, chip scanned, ping time, the like or any combination thereof. Optionally communication test may be undertaken at any time, for example at given intervals, milestones (activation of reader 100), random time intervals, the like or any combination thereof.

Optionally the activation of tamperproof protection may optionally activate an alarm that may be communicated to authorized individuals; or may optionally render electronic circuitry 110 non-functional therein rendering reader 100 non-operational. Optionally an alarm state may be communicated by SMS, email, audible alarm, phone call, the like or any combination thereof.

Most preferably optimization module 112 forms an integral part of RFID circuitry 110. Optionally and preferably optimization module 112 provide for overcoming the communication errors and/or read failures experienced with state of the art RFID reader and vehicle. Most preferably communication optimization module 112 provides for scanning through a plurality of RFID frequencies and/or channels to identify the frequency which best suites communication with a specific vehicle side tag (not shown), therein reducing read failures. Most preferably optimization module 112 provides for optimizing communication between RFID reader 100 disposed about nozzle 10 and the vehicle RFID tag (not shown) disposed on the vehicle about the fuel tank inlet filler neck.

Most preferably optimization module ensures that optimal and secure communication conditions are in place between any given vehicle tag and nozzle reader 100. Most preferably following the scanning process module 112 identifies the optimal communication conditions and attributes for example including but not limited to frequency and channel, the like or any combination thereof, and sets the communication attributes of circuitry 110 to the identified optimal conditions associated with the specific car requesting fuel authorization.

Optionally the optimization module 112 provides for scanning through the communication frequency range and/or channel by utilizing a binary search and/or half-interval search and/or recursive search and/or iterative search, any combination thereof or the like. Optionally and preferably the optimization scan initiates from the middle of the frequency range.

Optionally the RFID reader 100 may communicate the optimal communication parameters conditions associated with a particular nozzle type 10 and vehicle RFID tag (not shown) to the authorization system (not shown) to store the data for optional future use, for example as a further vehicle identification parameters that may optionally be utilized in future authorization process to identify the vehicle according to the communication parameters.

Optionally reader 100 may be retrofit with existing RFID readers. Optionally and preferably circuitry module 110 may be comprising optimization module 112 and power supply module 104 may be retrofit to replace existing circuitry modules disposed on RFID readers.

Optionally and preferably optimization module 112 may be configured for retrofitting with existing state of the art RFID readers.

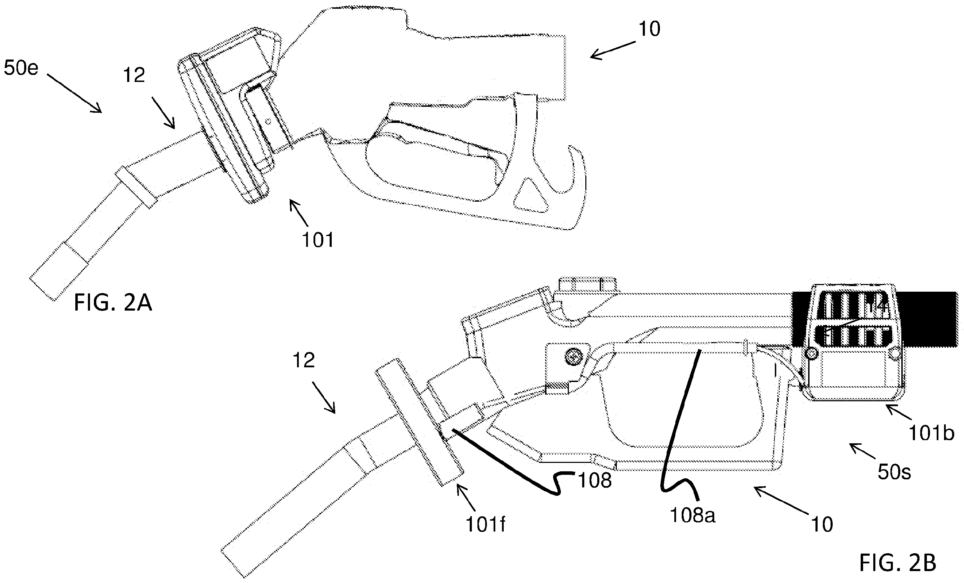

FIGs. 2A-B show two of a plurality of installations, not according to the invention, for system 50, where reader 100 is associated with different fuel dispensing nozzle 10 types therein requiring optional installation configuration and housing formation to be utilized. FIG. 2B depicts a split installation RFID reader system 50s while FIG. 2A depicts an end installation RFID system 50e, for example shown about the front end 12 of nozzle 10, optionally end RFID system 50e may optionally be realized about the back end 14 of nozzle 10.

FIG. 2A shows an end portion configuration wherein reader 100 is disposed within a single housing 101 and situated about the front side 12 of an optional dispensing nozzle 10 about spout 10s, most preferably realizing an end installation system 50e.

FIG. 2B shows a split installation configuration, forming split system 50s wherein reader 100 is disposed within a split housing comprising a front portion 101f and a back portion 101b. Each housing portion 101f, 101b is most preferably configured to associate with the respective side of nozzle 10 front 12 about spout 10s and back portion 14 about hose 10h.

Most preferably front portion housing 101f is disposed about dispensing nozzle front side 12 about spout 10s while back portion housing 101b is disposed about dispensing nozzle back side 14 about hose 10h. Optionally each housing member 101f, 101b may comprise optional components of reader 100. Optionally and most preferably antenna 106 is disposed within front portion housing 101f. Optionally and more preferably circuitry 110 may be disposed about back portion housing 101b. Optionally and more preferably tamperproof protection 108 is associated with both split housing portions 101f, 101b, for example as shown, most preferably to provide removal protection of either housing members 101f and/or 101b. Optionally and preferably removal protection 108 as shown in system 50s is provided in the form of a circuit-break configuration that is disposed within a conduit 108a running between front housing portion 101f and back housing portion 101b. Optionally if the circuit-break wire disposed within conduit 108a it essentially renders reader 100 non-functional, optionally and preferably by way of physically disconnecting between electronics module 100 and antennae 106.

FIG. 3A shows a schematic exploded view of reader 100 not according to the invention, forming end installation system 50e as shown in FIG. 2A. As previously described reader 100 may be disposed in a single housing 101, for example as shown. Optionally and preferably single housing 101 comprises a number of corresponding parts that form single housing 101 for example including but not limited to a main body member 101a and a cover member 101c, for example as shown.

Optionally and most preferably single housing 101 may be coupled and/or assembled onto nozzle 10 via an optional mounting adapter assembly 102, for example as shown. Optionally and preferably adapter assembly 102 provides for facilitating secure coupling between housing 101 and the body of nozzle 10, about spout 10s. Most preferably adapter assembly 102 comprises a plurality of adapter members provided to securely couple housing 101 to nozzle 10. Adapter assembly 102 may for example comprise a nozzle body bracket 102b and nozzle spout adapter 102h.

Optionally nozzle body bracket 102b provides for coupling housing 101 with a nozzle 10 structure for example by utilizing a coupling screw 102d. Optionally coupling screw 102d may be native to nozzle 10, therein providing for securely and seamlessly associated nozzle 10 with reader 100.

Optionally coupling screw 102d may further facilitate coupling and/or otherwise associating bracket 102b with spout adapter 102h about a borehole disposed on spout adapter coupling member 102a.

Most preferably spout adapter 102h provides for coupling and/or otherwise associating housing 101 about nozzle spout 10s.

Most preferably adapter 102h may be integrated and/or coupled or otherwise associated with housing 101 with a plurality of coupling screws, about main housing body 101a. Optionally and preferably main housing 101a comprises configured and dedicated recesses for securely receiving corresponding coupling structures about spout adapter 102a.

Most preferably spout adapter 102h may be securely coupled or otherwise associated with spout 10s by utilizing a plurality of coupling member 102c for example realized in the form of fixation and/or pressure screws, any combination thereof or the like. Optionally, spout adapter 102h may be further coupled with nozzle 10 about nozzle body bracket 102b about coupling member 102a with a common coupling screw 102d.

As shown, RFID antennae 106 is most preferably disposed about the front portion of housing 101. Antennae 106 may be provided as a standard RFID coil antennae that is optionally and preferably disposed such that it is preferably covered by reader cover 101c and is securely maintained within housing 101. Most preferably antennae 106 is functionally coupled with electronic circuitry module 110.

Reader circuitry module 110 comprising power supply module 104 is optionally and most preferably configured to power reader 100.

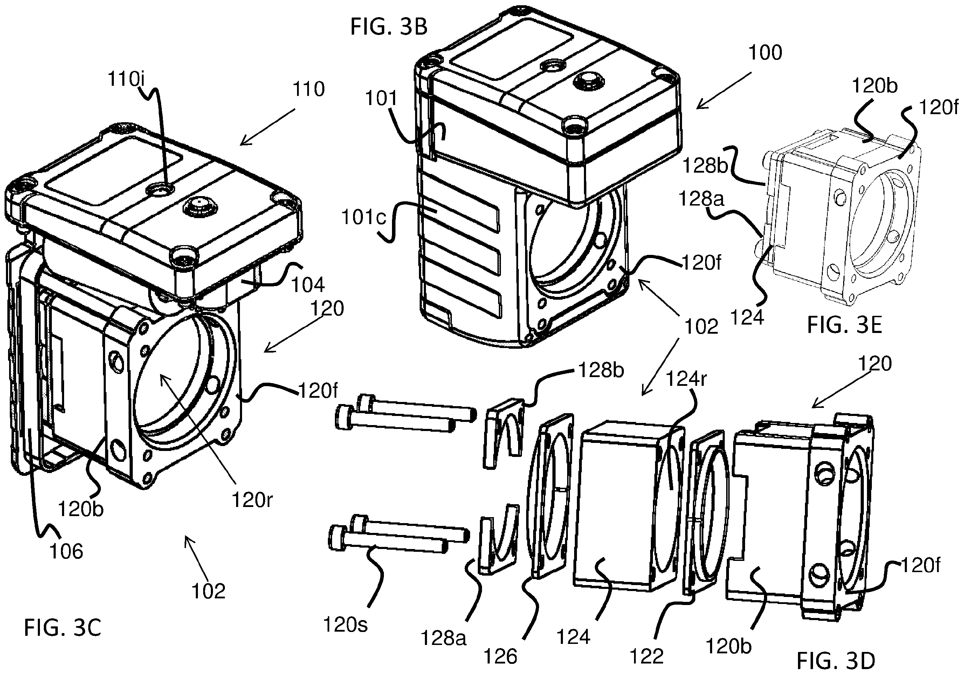

Most preferably power supply module is most preferably realized in the form of battery power. Optionally and most preferably power supply module 104 may be configured to run on replaceable and/or disposable batteries. For example, as shown, FIG. 3A,C shows power supply module 104 and its housing , most preferably power supply 104 may be accessed so as to allow battery replacement in non-laboratory conditions.. Most preferably battery replacement, according to the present invention, saves nozzle downtime due to power-supply replacement. Current state of the art RFID nozzle readers are configured such that power-supply replenishment and/or replacement may only be performed under laboratory conditions and require technical skills and training. The power supply module 104 overcomes this deficiency in the prior art.

Most preferably power supply module 104 provides power for circuitry 110 and is most preferably coupled thereto. Most preferably circuitry 110 provides for the processing and data communication allotted to RFID reader 100. Most preferably, circuitry 110 comprises an optimization module (not shown) as previously described that provides for identifying, selecting and optimizing communication between the vehicle identification tag (not shown) and authorization system (not shown) via RFID reader 100 that is realized and facilitated by electronic circuitry 110 and antenna 106. Most preferably the communication parameters of circuitry 110 may be configured by optimization module 112 for example including but not limited to communication frequency, channel, or the like. Optionally and preferably once module 112 identifies the optimal communication parameters for a particular vehicle tag, it sets circuitry module 110 to the optimal parameters to so as to be able to best read and communicate with vehicle tag (not shown).

Optionally the optimal communication settings identified by module 112 may be communicated and thereafter stored in a fuel authorization system or fleet management system, for future vehicular identification.

Optionally and most preferably circuitry module 110 further comprises a status indicator and/or display 110i most preferably for communicating to a user the RFID reader status. Circuitry indicator is shown in the form of an LED indicator that may for example indicate to a user the status of the RFID, by different colors and/or flash sequences. For example, a flash sequence of an LED indicator 110i may indicate that RFID reader 100 is functional, a different flash sequence may indicate that power supply, for example in the form of replaceable batteries may need replacement. Optionally a different light indicator or flash sequence of display 110i may indicate that the vehicle tag has been properly read and that the information is being conveyed to the authorization system. Optionally LED 110i may indicate that optimization module 112 is functional and search and/or has found the optimal communication parameters. Optionally LED 110i may indicate that tampering has been identified with module 108.

Most preferably circuitry 110 further comprises tamperproof protection 108, for example shown in the form of a circuit breaker. Most preferably tamperproof protection 108 may be provided such that an attempt to remove and/or disassociate a portion of reader 100 from nozzle 10 will trigger an alarm, as previously described, or render circuitry 110 non-functional. As shown, tamperproof protection 108 may be realized in the form of a circuit break member 108b and a corresponding cover 108c. Optionally and preferably cover 108c may be further associated with a fixation screw 108s, wherein if unauthorized attempts are made to remove screw 108s, circuitry 110 is broken and may be rendered non-operational and/or may communicate tampering signal, as previously described.

Optionally and preferably tamperproof protection 108 may span circuitry 110 and housing cover 101c. Optionally housing cover 101c may associate and/or otherwise couple with tamperproof protection 108 via a designated recess disposed about cover.

FIG. 3B-C show perspective views of RFID reader 100, similar to that shown in FIG. 3A however featuring a nozzle mounting adaptor 102 shown in greater detail in FIG. 3D, exploded view, FIG. 3E assembly view. RFID reader 100 is shown in an end installation system 50e as shown in FIG. 2A. As previously described reader 100 may be disposed in a single housing 101, for example as shown. Optionally and preferably single housing 101 comprises a number of corresponding parts that form single housing 101 for example including but not limited to a main body member 101a and a cover member 101c, for example as shown.

Housing 101 may be coupled and/or assembled onto nozzle 10 via a mounting adapter assembly 102, for example as shown. Adapter assembly 102 provides for facilitating secure coupling between housing 101 and the body of nozzle 10, about its spout 10s.

FIG. 3C shows reader 100 with a portion of housing 101 removed so as to reveal adapter assembly 102 and antennae 106. Adapter assembly 102 features a housing 120 having a central recess 120r that is utilized to mount reader 100 onto spout 10s.

FIG. 3D, shows an exploded view of adapter assembly 102 including main housing 120, gap-plates 122, 126, core 124 and split backing 128a, 128b. Preferably each of housing 120, gap-plates 122, 126 and core 124 comprise a central recess 120r adapted to receive the shaft of nozzle spout 10s.

Main housing 120 is adapted to couple spout 10s and reader housing 101 over a central recess 120r. Most preferably housing 120 provides for receiving core 124 between two plates 122, 126 where plates 122 and 126 are configured to be pressed toward one another therein against cores 124, therein core 124 is sandwiched between plates 122, 126 within housing 120. The force is exerted between plates 122, 126 preferably provided with coupling screws 120s. Most preferably by pressing plates 122, 126 with screws 120s toward one another and against core 124, applies deformation forces on cores 124 such that it is pressed and conforms to securely fit over spout 10s of nozzle dispenser 10.

Optionally and preferably plates 122, 126 are pressed together over core 124 as facilitated with split backing 128a, 128b, as shown. Optionally split backing 128a,b provide for applying pressure onto plate 126 and therein plates 122 and core 124 with screws 120s that are utilized to press backing 128a,b toward front face 120f of housing 120. Optionally split backings 128a,b may be provided as a single unit and/or a multi-pieces unit for example including four or more pieces.

Optionally housing 120 may be fit with tamperproof protection 108, for example as previously described so as to deter and/or identify any attempts for removing reader 100 from spout 10s. Optionally tamperproof protection 108 may be associated over housing face 120f. Optionally tamperproof protection 108 may be associated between housing 120, in particular face 120f, and antenna 106, where antenna 126 is rendered non-functional if an attempt to remove housing120 from spout 10s.

Optionally and preferably core 124 is provided from pliable materials for example including but not limited to rubber or the like materials, that may be pressed against spout 10s to ensure secure coupling and fitting. Optionally and preferably core 124 may be provided from materials that are inert to the fuel dispensing nozzle's 10 environment for example including fuels, oils, gasoline fumes, the like, or any combinations thereof. Preferably core 124 may be provided form materials having a high coefficient of friction, so as to ensure that reader 100 is securely coupled onto spout 10s.

Preferably core 124 comprises a central recess 124r in line with the recess of housing 120 particularly about face 120f. Most preferably the size of and shape of central recess 124r may be adjusted by applying a force onto cores 124 with plates 122, 126 so as to urge core 124 onto spout 10s.

Although housing 120 is shown as a cubic structure having a face 120f and body 120b. Body 120b may be configured as a frame having a central opening and/or recess configured to receive plates 122, 126 and core 124 and to be closed with backing 128a,b. Face 120f is configured to interface with housing 101 and/or antennae 106 so as to securely associated housing 120 with reader 100. Preferably face 120f is provided with a central opening and/or recess 120r configured to receive spout 10s. Optionally the size of recess 120r may be configured according to the size of at least one of nozzle dispenser 10 and/or spout 10s.

While housing 120 is shown in the configuration of a cubic quadrilateral the shape and/or size is not limited to such a configuration, optionally housing 120 may be configured to be a ring-like and/or oval and /or circular structure for example similar to that shown in FIG., 3A.

FIG. 3E shows an assembled view of FIG. 3D showing the assembled sandwich configuration of mounting adapter 102 utilizing main housing 120 and core 124.FIG. 4A shows an illustrative perspective view of split RFID system 50s as depicted in FIG. 2B, with nozzle 10 removed. FIG. 4A shows a close up view of split housing back portion 101b and split housing front portion 101f. Most preferably housing front portion 101f comprise antennae 106, while back portion 101b comprise electronic module 110, with tamperproof protection 108 spanning both back portion 101b and front portion 101f. Optionally front portion housing 101f may be configured to associate with and/or securely receive nozzle spout 10s and may comprise an integrated mounting adapter 102 for associating with spout 10s.

FIG. 4B shows an exploded view of back portion 101b, not according to the invention, revealing electronic module 110 comprising power supply module 104 and optimization module 112 not shown. Optionally housing back portion 101b comprises an integrated mounting adapter 102 that is configured to couple and/or otherwise associate with an receive hose 10h, as housing 101b is adapted to sit on hose 101h. Most preferably optimization module 112 functions as previously described to optimize communication with a vehicle tag (not show). Optionally and preferably back portion housing 101b comprises a recess to house tamperproof conduit 108a provides to allow tamperproof means for example in the form of circuit break wires to pass within conduit 108a from back portion housing 101b to front portion housing 101f, therein should any tampering attempts be made on either back portion or front portion of system 50s the tamperproof measure, as previously described, would be activated.

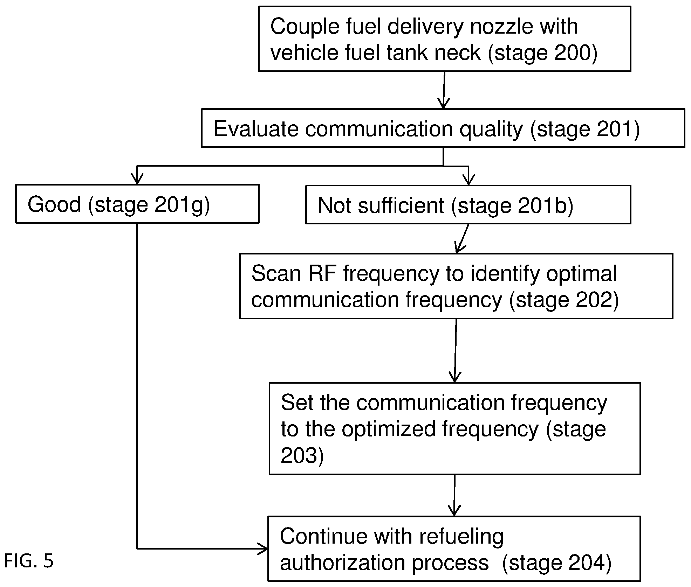

FIG. 5 shows an optional method of using the RFID reader 100 according to optional embodiment of the present invention comprising an optimization module 112. First in stage 200, system 50 comprising fuel dispensing nozzle 10 associated with RFID reader 100 is placed within the vehicle fuel tank's filler neck, most preferably to allow reader 100 to be within wireless RF communication distance from the vehicle side RFID tag generally disposed about the filler neck. Most preferably the wireless association preferably allows the vehicle tag and reader 100 to undertake initial communication. Optionally initial communication parameters may optionally be based on a default communication parameters for example including but not limited to frequency and channel.

Next in stage 201, optimization module 112 most preferably evaluates initial communication parameters to determine the quality of communication signal. Optionally, if communication quality is good, as depicted in stage 201g, the fuel authorization process continues. Optionally, if communication quality is not-sufficiently good and/or not optimal, as depicted in stage 201b, the fuel authorization advances to stage 202.

In stage 202 the optimization module optionally scans for the optimal communication settings between vehicle tag and reader 100, until identifying the optimal communication parameters for example including frequency and/or channel.

Optionally the optimal communication settings associated with the vehicle requesting fueling authorization may be obtained from a fuel authorization system and/or a fleet management system such that optimization module 112 may receive the optimal communication parameters and/or settings for the specific vehicle should they be available.

Next in stage 203 once the optimal communication parameters and/or settings are determined by module 112, module 112 communicates the parameters to circuitry 110 wherein the parameters are set so as to allow for optimal communication.

Finally in stage 204 once communication between vehicle tag and reader 100 are optimized and communication channels are open and activated most preferably fuel authorization process is undertaken, as is known and accepted in the art. various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A mounting assembly (120) configured to be securely mounted onto a portion (12,14) of a fuel delivery nozzle (10), said mounting assembly having a central recess (120r) for receiving a portion (12,14) of said fuel delivery nozzle (10), said mounting assembly including a housing body (120b), a housing face (120f), and a core member (124) disposed between two plates (122,126); wherein said core member (124) and said two plates (122,126) are disposed internal to said housing body (120b); said core member (124) consisting of resilient material responsive to the application of a force; said core member being configured according to the shape of said housing body (120b) and having a central recess (124r) configured to receive and interface with a portion (12,14) of said fuel delivery nozzle (10), **characterized in that** said core member (124) is configured to be responsive to said force when said force urges said two plates (122, 126) one towards another and compresses said core member (124), wherein said core (124) is configured to deform, so as to securely fit and couple said mounting assembly (120) onto a portion (12,14) of said fuel delivery nozzle.

2. The mounting assembly of claim 1 wherein said force is generated with screws (120s) across said plates therein and said screws (120s) are configured to urge said at least two plates toward one another and to generate pressure on said core member (124) onto a portion (12,14) of said fuel delivery nozzle (10).

3. The mounting assembly of claim configured such that said screws (120s) generate a pressure that is orthogonal to the direction where said screws (120s) are driven, thereby causing deformation of said core member (124).

4. The mounting assembly of claim 1 further comprising at least one packing (128a,b) configured to be associated with at least one of said two plates (122,126) and provided to facilitate generating said force between said plates.

5. The mounting assembly of claim 1 wherein said core member (124) consists of materials that are inert to a fueling dispensing environment.

6. The mounting assembly of claim 1 further comprising tamperproof protection so as to detect any attempt to disassociate said mounting assembly from said fuel delivery nozzle (10).

7. The mounting assembly of claim 6 wherein said tamperproof protection is disposed along one of: said housing body (120b) or said housing face (120f).

8. The mounting assembly of claim 1 wherein said core member (124) consists of materials having high coefficient of friction.

9. The mounting assembly of claim 1 wherein said core member (124) consists of rubber.

10. The mounting assembly of claim 1 wherein said core member (124) consists of resilient materials configured to conform to the substrate onto which it is associated.

11. An RFID reader assembly for facilitating automatic fuel authorization between a vehicle side RFID tag and a fuel authorization server, wherein said RFID reader is configured to be disposed about a fuel dispensing nozzle provided to read said vehicle side RFID tag, the RFID reader comprising:
a. a housing (101) adapted to be fit over at least a portion (12,14) of a fuel delivery nozzle (10), said housing (101) including the mounting assembly of any of claims 1-10, and wherein said housing (101) is configured to be associated with said housing face (120f)
b. a RFID antenna (106) for communication with said vehicle side RFID tag;
c. an electronic circuitry module (110) and power supply module (104) for facilitating communication with said vehicle tag; wherein said electronic circuitry comprises a communication optimization module (112) for identifying and setting optimal wireless communication parameters for communicating with a vehicle side RFID tag; wherein said optimization module is configured to perform a scan to identify the optimal frequency for reading said RFID vehicle tag.

12. The RFID reader assembly of claim 11 further comprising a tamperproof protection (108) disposed between said mounting assembly (120) and said antenna (106) wherein said antenna (106) configured to be rendered non-functional during an attempt to remove said mounting assembly (120).

13. The RFID reader assembly of claim 12 wherein said tamperproof protection (108) is provided in the form selected from the group of: a circuit break and a plurality of removal protection ID microchip.

14. The RFID reader assembly of claim 12 wherein activation of said tamperproof protection (108) provides for at least one or more action selected from the group consisting of: rendering said circuitry module non-functional, disconnecting antenna, activating an alarm state, communicating an alarm state, any combination thereof.

15. The RFID reader assembly of claim 11 wherein said housing (101) is configured for installation about both ends (12,14) of said fuel dispensing nozzle (10); said housing including a front portion having said RFID antenna and a back portion having said circuitry and power supply modules.

## Patentansprüche

1. Montageanordnung (120), die konfiguriert wurde, um an einem Abschnitt (12, 14) einer Kraftstoffabgabedüse (10) sicher montiert zu werden, wobei die betreffende Montageanordnung eine mittige Aussparung (120r) zur Einsetzung eines Abschnittes (12, 14) der betreffenden Kraftstoffabgabedüse (10) beinhaltet, wobei die betreffende Montageanordnung einen Gehäusekörper (120b), eine Gehäuseoberfläche (120f) und ein Kernelement (124), das zwischen zwei Platten (122, 126) angeordnet ist, umfasst;
wobei das betreffende Kernelement (124) und die betreffenden beiden Platten (122, 126) im Inneren des Gehäusekörpers (120b) angeordnet sind;
wobei das betreffende Kernelement (124) aus einem elastisches Material besteht, das auf eine Kraftanwendung reagiert;
wobei das betreffende Kernelement entsprechend der Form des Gehäusekörpers (120b) konfiguriert wird, und eine zentrale Aussparung (124r) zur Einsetzung eines Abschnittes (12, 14) der betreffenden Kraftstoffabgabedüse (10) umfasst, die mit dem Abschnitt in Eingriff stehend konfiguriert ist,
**dadurch gekennzeichnet, dass** das betreffende Kernelement (124) so konfiguriert ist, dass es auf die betreffende Kraft reagiert, wenn die betreffende Kraft die betreffenden beiden Platten (122, 126) aufeinander drückt und das betreffende Kernelement (124) zusammendrückt,
wobei das betreffende Kernelement (124) so konfiguriert ist, dass er sich so verformt, dass die betreffende Montageanordnung (120) auf einen Abschnitt (12, 14) der betreffenden Kraftstoffabgabedüse sicher montiert und verbindet wird.

2. Montageanordnung nach Anspruch 1, wobei die betreffende Kraft durch Schrauben (120s) entlang der betreffenden Platten erzeugt wird, und
die betreffenden Schrauben (120s) so konfiguriert sind, dass sie die betreffenden mindestens beiden Platten (122, 126) gegeneinander drücken und Druck auf das betreffende Kernelement (124) über einen Abschnitt (12, 14) der betreffenden Kraftstoffabgabedüse (10) ausüben.

3. Montageanordnung nach Anspruch 2, so konfiguriert, dass die betreffenden Schrauben (120s) einen Druck senkrecht zu der Richtung erzeugen, in der die Schrauben (120s) angezogen werden, und wodurch bewirkt wird, dass sich das Kernelement (124) verformt.

4. Montageanordnung nach Anspruch 1, die außerdem mindestens einen Puffer (128a, b) umfasst, der zur Korrelation mit mindestens einer der beiden Platten (122, 126) konfiguriert und zur Erleichterung der Erzeugung der betreffenden Kraft zwischen den betreffenden Platten vorgesehen ist.

5. Montageanordnung nach Anspruch 1, wobei das betreffende Kernelement (124) aus Materialien besteht, die ein Kraftstoffverteilungsmedium nicht beeinflussen.

6. Montageanordnung nach Anspruch 1, die außerdem einen Manipulationsschutz umfasst, um jeden Versuch festzustellen, die betreffende Montageanordnung von der betreffenden Kraftstoffabgabedüse (10) zu trennen.

7. Montageanordnung nach Anspruch 6, wobei der betreffende Manipulationsschutz entlang einer der folgenden Stellen angeordnet ist: der betreffende Gehäusekörper (120b) oder die betreffende Gehäuseoberfläche (120f).

8. Montageanordnung nach Anspruch 1, wobei das betreffende Kernelement (124) aus Materialien mit einem hohen Reibungskoeffizienten besteht.

9. Montageanordnung nach Anspruch 1, wobei das betreffende Kernelement (124) aus Gummi besteht.

10. Montageanordnung nach Anspruch 1, wobei das betreffende Kernelement (124) aus elastischen Materialien besteht, die so konfiguriert sind, dass sie sich an die untere Schicht anpassen, mit der sie verbunden sind.

11. Eine RFID-Leseanordnung zwischen einem RFID-Etikett und einem Kraftstoffautorisierungsserver, wobei die RFID-Leseanordnung so konfiguriert ist, dass sie um eine zum Ablesen des fahrzeugseitigen RFID-Etikett vorgesehene Kraftstoffausgabedüse angeordnet wird; die RFID-Leseanordnung beinhaltet Folgendes:
a. ein Gehäuse (101), das adaptiert ist, um auf mindestens einen Abschnitt (12, 14) einer Kraftstoffverteilungsdüse (10) aufgesetzt zu werden, wobei das betreffende Gehäuse (101) die Montageanordnung nach einem der Ansprüche 1 bis 10 umfasst, und das betreffende Gehäuse (101) so konfiguriert ist, dass es in Korrelation mit der Gehäuseoberfläche (120f) steht,
b. eine RFID-Antenne (106) zum Kommunizieren mit dem fahrzeugseitigen RFID-Etikett,
c. ein elektronisches Schaltungsmodul (110) und ein Stromversorgungsmodul (104), um die Kommunikation mit dem Fahrzeugetikett herzustellen,
wobei die betreffende elektronische Schaltung ein Modul (112) für Kommunikationsoptimierung zum Definieren und Einstellen optimaler drahtloser Kommunikationsparameter zum Kommunizieren mit einem fahrzeugseitigen RFID-Etikett umfasst,
wobei das Optimierungsmodul so konfiguriert ist, dass es einen Scan durchführt, um die optimale Frequenz zum Lesen des betreffenden RFID-Fahrzeugetiketts festzustellen.

12. RFID-Leseanordnung nach Anspruch 11, die außerdem einen manipulationssicheren Schutz (108) umfasst, der zwischen der betreffenden Montageanordnung (120) und der betreffenden Antenne (106) angeordnet ist, wobei die betreffende Antenne (106) so konfiguriert ist, dass sie bei einem Versuch, die betreffende Montageanordnung (120) zu entfernen, deaktiviert wird.

13. RFID-Leseanordnung nach Anspruch 12, wobei der manipulationssichere Schutz (108) in der Form vorgesehen ist, die aus der folgenden Gruppe ausgewählt wird: ein Leistungsschalter und eine Vielzahl von ausstoßgeschützten ID-Mikrochips besteht.

14. RFID-Leseanordnung nach Anspruch 12, wobei die Aktivierung des betreffenden manipulationssicheren Schutz (108) mindestens eine oder mehrere Aktionen umfasst, die aus der Gruppe ausgewählt sind, die aus folgendes besteht:
Deaktivierung des betreffenden Schaltungsmoduls, Trennung der Antenne, Aktivierung eines Alarmzustands, Senden eines Alarmzustandes, eine beliebige Kombination von denen.

15. RFID-Leseanordnung nach Anspruch 11, wobei das betreffende Gehäuse (101) so konfiguriert ist, dass es um die beiden Enden (12, 14) der betreffenden Kraftstoffabgabedüse (10) montiert wird, wobei das Gehäuse einen vorderen Abschnitt mit der betreffenden RFID-Antenne und einen hinteren Abschnitt mit den Schaltungs-und Stromversorgungsmodulen.

## Revendications

1. Ensemble de montage (120) configuré de manière à être monté de façon sécurisée sur une partie (12, 14) d'une buse de distribution de carburant (10), ledit ensemble de montage ayant un évidement central (120r) destiné à recevoir une partie (12, 14) de ladite buse de distribution de carburant (10), ledit ensemble de montage comprenant un corps de boîtier (120b), une face de boîtier (120f) et un élément noyau (124) disposé entre deux plaques (122, 126);
dans lequel ledit élément noyau (124) et lesdites deux plaques (122, 126) sont disposés à l'intérieur dudit corps de boîtier (120b);
ledit élément noyau (124) consistant en un matériau élastique sensible à l'application d'une force;
ledit élément central étant configuré en fonction de la forme dudit corps de boîtier (120b) et présentant un évidement central (124r) configuré pour recevoir et interfacer avec une partie (12, 14) de ladite buse de distribution de carburant (10),
**caractérisé en ce que** ledit élément noyau (124) est configuré de manière à réagir à ladite force lorsque ladite force pousse lesdites deux plaques (122, 126) l'une vers l'autre et comprime ledit élément noyau (124),
dans lequel ledit noyau (124) est configuré pour se déformer, de manière à ajuster solidement et coupler ledit ensemble de montage (120) sur une partie (12, 14) de ladite buse de distribution de carburant.

2. Ensemble de montage selon la revendication 1, dans lequel ladite force est générée avec des vis (120s) à travers lesdites plaques et
lesdites vis (120s) sont configurées pour pousser lesdites au moins deux plaques l'une vers l'autre et pour générer une pression sur ledit élément noyau (124) sur une partie (12, 14) de ladite buse de distribution de carburant (10).

3. Ensemble de montage selon la revendication 2, configuré de manière à ce que lesdites vis (120s) génèrent une pression qui est orthogonale à la direction dans laquelle lesdites vis (120s) sont entraînées, provoquant ainsi la déformation dudit élément noyau (124).

4. Ensemble de montage selon la revendication 1, comprenant, en outre, au moins un joint (128a, b) configurée pour être associée à au moins l'une desdites deux plaques (122, 126) et prévue pour faciliter la génération de ladite force entre lesdites plaques.

5. Ensemble de montage selon la revendication 1, dans lequel ledit élément noyau (124) est constitué de matériaux inertes pour un environnement de distribution de carburant.

6. Ensemble de montage selon la revendication 1, comprenant, en outre, une protection inviolable de manière à détecter toutes sortes de tentative de dissociation dudit ensemble de montage de ladite buse de distribution de carburant (10).

7. Ensemble de montage selon la revendication 6, dans lequel ladite protection inviolable est disposée le long de l'un parmi: ledit corps de boîtier (120b) ou ladite face de boîtier (120f).

8. Ensemble de montage selon la revendication 1, dans lequel ledit élément noyau (124) est constitué de matériaux ayant un coefficient de frottement élevé.

9. Ensemble de montage selon la revendication 1, dans lequel ledit élément noyau (124) est constitué de caoutchouc.

10. Ensemble de montage selon la revendication 1, dans lequel ledit élément noyau (124) est constitué de matériaux élastiques configurés de manière à se conformer au substrat sur lequel il est associé.

11. Ensemble d'un lecteur RFID destiné à faciliter l'autorisation automatique de carburant entre une étiquette RFID d'un côté du véhicule et un serveur d'autorisation de carburant, ledit lecteur RFID étant configuré pour être disposé autour d'une buse de distribution de carburant prévue pour lire ladite étiquette RFID du côté véhicule, le lecteur RFID comprenant:
a. un boîtier (101) adapté de manière à se reposer sur au moins une partie (12, 14) d'une buse de distribution de carburant (10), ledit boîtier (101) comprenant l'ensemble de montage de l'une quelconque des revendications 1 à 10, et dans lequel ledit boîtier (101) est configuré pour être associé à ladite face de boîtier (120f)
b. une antenne RFID (106) pour la communication avec ladite étiquette RFID du côté véhicule;
c. un module de circuit électronique (110) et un module d'alimentation (104) pour faciliter la communication avec ladite étiquette de véhicule;
dans lequel ledit circuit électronique comprend un module d'optimisation de communication (112) pour identifier et définir des paramètres de communication sans fil optimaux pour communiquer avec une étiquette RFID du côté véhicule;
dans lequel ledit module d'optimisation est configuré pour effectuer un balayage afin d'identifier la fréquence optimale pour lire ladite étiquette de véhicule RFID.

12. Ensemble de lecteur RFID selon la revendication 11, comprenant, en outre, une protection inviolable (108) disposée entre ledit ensemble de montage (120) et ladite antenne (106), ladite antenne (106) étant configurée pour être rendue non fonctionnelle lors d'une tentative de retrait dudit ensemble de montage. (120).

13. Ensemble de lecteur RFID selon la revendication 12, dans lequel ladite protection inviolable (108) est fournie sous la forme choisie dans le groupe des éléments suivants: une coupure de circuit et une pluralité de micro-puces d'identification de protection contre le retrait.

14. Ensemble de lecteur RFID selon la revendication 12, dans lequel l'activation de ladite protection inviolable (108) permet au moins une ou plusieurs actions sélectionnées dans le groupe comprenant:
rendre ledit module de circuit non fonctionnel, coupure de la connexion d'antenne, l'activation d'un état d'alarme, communication d'un état d'alarme, toute combinaison de ceux-ci.

15. Ensemble de lecteur RFID selon la revendication 11, dans lequel ledit boîtier (101) est configuré pour être installé autour des deux extrémités (12, 14) de ladite buse de distribution de carburant (10); ledit boîtier comprenant une partie avant comportant ladite antenne RFID et une partie arrière comportant lesdits circuits et modules d'alimentation.
